# EUROPEAN PATENT APPLICATION

(11) **EP 4 628 648 A1**
(43) Date of publication of application: **08.10.2025**
(21) Application number: 23897480.2
(22) Date of filing: 14.11.2023
(51) Int. Cl.: D06M 15/643, B60R 21/235, C08K 3/36, C08K 5/098, C08K 5/54, C08L 83/04, C08L 83/07, C09D 7/61, C09D 183/04, C09D 183/07, D06M 13/184

(54) **ADDITION-CURABLE LIQUID SILICONE RUBBER COMPOSITION FOR AIRBAGS, AND AIRBAG**

(30) Priority: 29.11.2022 JP 2022190749
(71) Applicant: SHIN-ETSU CHEMICAL CO., LTD., Tokyo 100-0005 (JP)
(72) Inventor: ASHIDA, Ryo, Annaka-shi, Gunma 379-0224 (JP); UBUKATA, Shigeru, Annaka-shi, Gunma 379-0224 (JP); HIRABAYASHI, Satao, Annaka-shi, Gunma 379-0224 (JP)
(74) Representative: Röthinger, Rainer
(86) International application number: PCT/JP2023/040941
(87) International publication number: WO 2024/116829

(57) **Abstract**

The present invention provides an addition-curable liquid silicone rubber composition for an airbag, the composition including: (A) an organopolysiloxane having two or more alkenyl groups bonded to a silicon atom in one molecule and having a polymerization degree of 50 to 2,000; (B) an organohydrogenpolysiloxane having two or more hydrogen atoms bonded to a silicon atom (hydrosilyl groups) in one molecule; (C) silica fine powder having a BET-method specific surface area of 50 m²/g or more; (D) a catalyst for a hydrosilylation reaction; (E) an organosilicon compound having an adhesiveness-imparting functional group; and (F) a metal carboxylate salt. This provides: an addition-curable liquid silicone rubber composition for an airbag that yields an excellent low combustion rate property and that causes no color unevenness when applied on a base fabric for an airbag and cured; and an airbag.

## Description

### TECHNICAL FIELD

The present invention relates to an addition-curable liquid silicone rubber composition for an airbag and an airbag.

### BACKGROUND ART

A silicone rubber composition for an airbag for a purpose of forming a rubber coating film on a fibric surface has been conventionally proposed. Since the airbag having the silicone rubber coating film has excellent holdability of an internal pressure and a low combustion rate property, such an airbag is suitably used for an airbag for automobiles, etc.

Such an addition-curable liquid silicone rubber composition for an airbag contains a resin-like polysiloxane, and known is a method for producing an addition-curable liquid silicone rubber composition for an airbag including mixing a siloxane component with silica, a surface-treating agent, and water in advance (Patent Document 1). The fibric surface is coated with this composition to obtain a base fabric for an airbag having an excellent low combustion rate property. Further, disclosed is an addition-curable liquid silicone rubber composition for an airbag using an organohydrogenpolysiloxane having a T unit or a Q unit as a crosslinking agent (Patent Document 2). A coating base fabric on which this composition is applied is characterized by excellent strength. Disclosed is an addition-curable liquid silicone rubber composition for an airbag in which a silicone resin composed of M, D, and Q units and having a crosslinkable functional group only in the D unit is blended as a flame retardant (Patent Document 3). An airbag on which this composition is applied is characterized by an excellent low combustion rate property.

Meanwhile, an amount of the applied silicone rubber composition has been decreased in recent years in order to reduce a space and a weight, and there has been a demand for development of a silicone rubber composition for an airbag having flame retardancy equivalent to the conventional airbag even with the decreased applying amount. For improving the flame retardancy, it is considered to blend a flame retardant. For example, disclosed are: a composition in which iron (III) oxide monohydrate or α-iron (III) oxide is blended as the flame retardant in a silicone rubber composition (Patent Document 4); a composition with blended aluminum hydroxide (Patent Document 5); a composition with a blended phosphazene (Patent Document 6); etc. However, blending a solid flame retardant in the silicone rubber composition may precipitate the flame retardant due to a difference in the density. Due to the thin silicone rubber layer in the recent silicone-coated airbag base fabric with the low applying amount, use of the solid flame retardant having a large particle diameter exposes a part of the flame retardant on a surface of the silicone rubber layer, which may fail to achieve sufficient airtightness. Further, since the solid flame retardant is not dissolved with the silicone rubber composition, the solid flame retardant is not dispersed uniformly in the silicone layer. Thus, coating unevenness may occur during coating, the obtained silicone coating base fabric may have varied base fabric properties, such as flame retardancy and tensile strength, depending on sampling positions.

### CITATION LIST

### PATENT LITERATURE

Patent Document 1: JP 2013-209517 A
Patent Document 2: JP 2019-513907 A
Patent Document 3: WO 2018/168315 A1
Patent Document 4: JP 2022-072086 A
Patent Document 5: JP 2010-053493 A
Patent Document 6: JP 2014-136722 A

### SUMMARY OF INVENTION

### TECHNICAL PROBLEM

The present invention has been made in view of the above circumstances. An object of the present invention is to provide: an addition-curable liquid silicone rubber composition for an airbag that yields an excellent low combustion rate property and that causes no color unevenness when applied on a base fabric for an airbag and cured; and an airbag.

### SOLUTION TO PROBLEM

To solve the above problem, the present invention provides an addition-curable liquid silicone rubber composition for an airbag, the composition including:
(A) 100 parts by mass of an organopolysiloxane having two or more alkenyl groups bonded to a silicon atom in one molecule and having a polymerization degree of 50 to 2,000;
(B) an organohydrogenpolysiloxane having two or more hydrogen atoms bonded to a silicon atom (hydrosilyl groups) in one molecule at an amount so that the hydrosilyl groups contained in the composition is 1 to 10 mol per mole of a sum of alkenyl groups bonded to a silicon atom contained in the composition;
(C) 1 to 50 parts by mass of silica fine powder having a BET-method specific surface area of 50 m²/g or more;
(D) a catalyst for a hydrosilylation reaction at 1 to 500 ppm in terms of a mass of a catalyst metal element relative to a mass of the component (A);
(E) 0.1 to 10 parts by mass of an organosilicon compound having an adhesiveness-imparting functional group; and
(F) a metal carboxylate salt at 100 to 5,000 ppm in terms of a mass of a center metal relative to the mass of the component (A).

With the addition-curable liquid silicone rubber composition for an airbag as above, the silicone coating base fabric for an airbag produced therefrom has excellent flame retardancy and causes no color unevenness.

In the present invention, the component (E) is preferably an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, in one molecule.

With the addition-curable liquid silicone rubber composition for an airbag as above, the silicone coating base fabric for an airbag produced therefrom has more excellent adhesiveness.

In the present invention, the composition preferably further includes, as a component (G), one or more condensation catalysts selected from an organotitanium compound, an organozirconium compound, and an organoaluminum compound at 0.05 to 5 parts by mass relative to 100 parts by mass of the component (A).

The addition-curable liquid silicone rubber composition for an airbag as above yields more excellent adhesiveness to the base fabric of the silicone rubber layer for an airbag.

In the present invention, the metal carboxylate salt of the component (F) is preferably a metal salt of a carboxylic acid having 6 or more carbon atoms.

The metal carboxylate salt as above improves compatibility with the silicone rubber composition, and thus, the metal carboxylate salt can be easily dispersed. With the addition-curable liquid silicone rubber composition for an airbag as above, the silicone coating base fabric for an airbag produced therefrom has more excellent flame retardancy.

In the present invention, a center metal ion of the metal carboxylate salt of the component (F) is preferably a trivalent iron ion.

The metal carboxylate salt as above is inexpensively available. With the addition-curable liquid silicone rubber composition for an airbag as above, the silicone coating base fabric for an airbag produced therefrom has more excellent flame retardancy.

In the present invention, the composition preferably further includes, as a component (H), a powdery organopolysiloxane resin having three-dimensional network structure (provided that the organopolysiloxane resin has no hydrogen atom bonded to a silicon atom) at 0.1 to 100 parts by mass relative to 100 parts by mass of the component (A).

With the addition-curable liquid silicone rubber composition for an airbag as above, the silicone coating base fabric for an airbag produced therefrom has more excellent flame retardancy.

In addition, the present invention provides an airbag including a cured coating film of the aforementioned addition-curable liquid silicone rubber composition for an airbag on a base fabric for an airbag.

The airbag as above has excellent flame retardancy and causes no color unevenness.

### ADVANTAGEOUS EFFECTS OF INVENTION

As above, the present invention can provide: an addition-curable liquid silicone rubber composition for an airbag that yields excellent flame retardancy and that causes no color unevenness by applying the composition on a base fabric for an airbag and cured; and an airbag.

### DESCRIPTION OF EMBODIMENTS

As noted above, there has been a demand for development of: an addition-curable liquid silicone rubber composition for an airbag that yields excellent flame retardancy when applied on a base fabric for an airbag and cured; and an airbag.

The present inventors have earnestly studied the above problems, and consequently found that an addition-curable liquid silicone rubber composition for an airbag containing a metal carboxylate salt yields excellent flame retardancy and causes no color unevenness of the coat base fabric when applied on a base fabric for an airbag and cured. This finding has led to completion of the present invention.

Specifically, the present invention is an addition-curable liquid silicone rubber composition for an airbag, the composition including:
(A) 100 parts by mass of an organopolysiloxane having two or more alkenyl groups bonded to a silicon atom in one molecule and having a polymerization degree of 50 to 2,000;
(B) an organohydrogenpolysiloxane having two or more hydrogen atoms bonded to a silicon atom (hydrosilyl groups) in one molecule at an amount so that the hydrosilyl groups contained in the composition is 1 to 10 mol per mole of a sum of alkenyl groups bonded to a silicon atom contained in the composition;
(C) 1 to 50 parts by mass of silica fine powder having a BET-method specific surface area of 50 m²/g or more;
(D) a catalyst for a hydrosilylation reaction at 1 to 500 ppm in terms of a mass of a catalyst metal element relative to a mass of the component (A);
(E) 0.1 to 10 parts by mass of an organosilicon compound having an adhesiveness-imparting functional group; and
(F) a metal carboxylate salt at 100 to 5,000 ppm in terms of a mass of a center metal relative to the mass of the component (A).

Hereinafter, the present invention will be described in detail, but the present invention is not limited thereto. Herein, a viscosity is a value measured at 25°C by a method described in JIS K 7117-1:1999 with a rotary viscosimeter. A weight-average polymerization degree is a value determined as a weight-average molecular weight (a weight-average polymerization degree) in terms of polystyrene by gel permeation chromatography (GPC) analysis measured under the following condition with tetrahydrofuran (THF) as a developing liquid.
Measurement Condition
Developing solvent: Tetrahydrofuran
Flow rate: 0.35 mL/min
Detector: Differential refractive index detector (RI)
Column: TSK Guardcolumn SuperH-L
TSKgel SuperH4000 (6.0 mm I.D. × 15 cm × 1)
TSKgel SuperH3000 (6.0 mm I.D. × 15 cm × 1)
TSKgel SuperH2000 (6.0 mm I.D. × 15 cm × 2)
(All the above are available from Tosoh Corporation.) Column temperature: 40°C
Injection amount of sample: 10 µL (a tetrahydrofuran solution at a concentration of 0.5 weight%)

### <Addition-Curable Liquid Silicone Rubber Composition for Airbag>

The addition-curable liquid silicone rubber composition for an airbag of the present invention includes:
(A) 100 parts by mass of an organopolysiloxane having two or more alkenyl groups bonded to a silicon atom in one molecule and having a polymerization degree of 50 to 2,000;
(B) an organohydrogenpolysiloxane having two or more hydrogen atoms bonded to a silicon atom (hydrosilyl groups) in one molecule at an amount so that the hydrosilyl groups contained in the composition is 1 to 10 mol per mole of a sum of alkenyl groups bonded to a silicon atom contained in the composition;
(C) 1 to 50 parts by mass of silica fine powder having a BET-method specific surface area of 50 m²/g or more;
(D) a catalyst for a hydrosilylation reaction at 1 to 500 ppm in terms of a mass of a catalyst metal element relative to a mass of the component (A);
(E) 0.1 to 10 parts by mass of an organosilicon compound having an adhesiveness-imparting functional group; and
(F) a metal carboxylate salt at 100 to 5,000 ppm in terms of a mass of a center metal relative to the mass of the component (A),
and the composition is preferably liquid at a room temperature (25°C). Hereinafter, each component will be described in detail.

### [Component (A)]

The organopolysiloxane of the component (A) is an organopolysiloxane having two or more alkenyl groups bonded to a silicon atom in one molecule and having a weight-average polymerization degree of 50 to 2,000, namely an organopolysiloxane having two or more alkenyl groups bonded to a silicon atom in one molecule and having a polymerization degree of 50 to 2,000. The component (A) is a base polymer (a main agent) of the addition-curable liquid silicone rubber composition for an airbag according to the present invention.

The component (A) is preferably a diorganopolysiloxane having a linear molecular structure in which the main chain is basically composed of repetition of diorganosiloxane units, and both ends of the molecular chain are blocked with triorganosiloxy groups. In the molecule of the linear organopolysiloxane of the component (A), positions of the silicon atom to which the alkenyl groups are bonded may be any one of or both the end of the molecular chain (namely the triorganosiloxy group) and the middle of the molecular chain (namely the bifunctional diorganosiloxane unit positioned at non-end of the molecular chain). The component (A) is particularly preferably a linear diorganopolysiloxane having alkenyl groups bonded to a silicon atom at at least both ends of the molecular chain.

Examples of the alkenyl group bonded to a silicon atom in the component (A) include alkenyl groups having typically 2 to 8 carbon atoms, and preferably 2 to 4 carbon atoms. Specific examples thereof include a vinyl group, an allyl group, a propenyl group, a butenyl group, a pentenyl group, a hexenyl group, a cyclohexenyl group, and a heptenyl group, and a vinyl group is particularly preferable.

A number of the alkenyl groups bonded to a silicon atom in the component (A) is 2 or more in one molecule, preferably 2 to 100, and more preferably 2 to 50.

Examples of a monovalent hydrocarbon group bonded to the silicon atom other than the alkenyl group in the component (A) include a monovalent hydrocarbon group having typically 1 to 12 carbon atoms, and preferably 1 to 10 carbon atoms. Specific examples of the monovalent hydrocarbon group include: alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; and halogen-substituted alkyl groups such as a chloromethyl group, a 3-chloropropyl group, and a 3,3,3-trifluoropropyl group. A methyl group is particularly preferable.

The weight-average polymerization degree of the component (A) is 50 to 2,000, preferably 100 to 1,500, and more preferably 120 to 1,000. A weight-average polymerization degree of less than 50 may deteriorate mechanical properties of the obtained addition-curable liquid silicone rubber composition for an airbag. A weight-average polymerization degree of more than 2,000 increases a viscosity of the obtained addition-curable liquid silicone rubber composition for an airbag, and coating operability may be deteriorated.

The viscosity at 25°C of the component (A) is preferably 50 to 200,000 mPa·s, more preferably 100 to 150,000 mPa·s, and further preferably 400 to 100,000 mPa·s. The viscosity of the component (A) of 50 mPa·s or more yields good mechanical properties of the obtained addition-curable liquid silicone rubber composition for an airbag, and the viscosity of 200,000 mPa·s or less does not increase the viscosity of the obtained addition-curable liquid silicone rubber composition for an airbag to yield good coating operability.

Specific examples of the organopolysiloxane of the component (A) include dimethylsiloxane-methylvinylsiloxane copolymer blocked at both ends of the molecular chain with trimethylsiloxy groups, methylvinylpolysiloxane blocked at both ends of the molecular chain with trimethylsiloxy groups, dimethylsiloxane-methylvinylsiloxane-methylphenylsiloxane copolymer blocked at both ends of the molecular chain with trimethylsiloxy groups, dimethylpolysiloxane blocked at both ends of the molecular chain with dimethylvinylsiloxy groups, methylvinylpolysiloxane blocked at both ends of the molecular chain with dimethylvinylsiloxy groups, dimethylsiloxane-methylvinylsiloxane copolymer blocked at both ends of the molecular chain with dimethylvinylsiloxy groups, dimethylsiloxane-methylvinylsiloxane-methylphenylsiloxane copolymer blocked at both ends of the molecular chain with dimethylvinylsiloxy groups, dimethylpolysiloxane blocked at both ends of the molecular chain with divinylmethylsiloxy groups, dimethylsiloxane-methylvinylsiloxane copolymer blocked at both ends of the molecular chain with divinylmethylsiloxy groups, dimethylpolysiloxane blocked at both ends of the molecular chain with trivinylsiloxy groups, dimethylsiloxane-methylvinylsiloxane copolymer blocked at both ends of the molecular chain with trivinylsiloxy groups, and a mixture composed of two or more of these organopolysiloxanes.

The organopolysiloxane of the component (A) may be used singly, or may be used in combination of two or more thereof.

### [Component (B)]

The component (B) is an organohydrogenpolysiloxane having two or more hydrogen atoms bonded to a silicon atom (hydrosilyl groups) in one molecule, and acts as a crosslinking agent for the present composition.

The molecular structure of the organohydrogenpolysiloxane of the component (B) may be any of linear, cyclic, branched, and three-dimensional network structures. In this case, the organohydrogenpolysiloxane having 2 to 300, particularly about 4 to 200, silicon atoms in one molecule (or a polymerization degree) and being liquid at 25°C is suitably used. The number of hydrosilyl groups contained in one molecule is 2 or more, preferably 2 to 200, more preferably 2 to 150, and further preferably 2 to 100. The hydrosilyl groups may be present at an end of the molecular chain, may be present at the side chain (the middle of the molecular chain), or may be present at both of them.

Examples of a substituent bonded to the silicon atom of the component (B) include a monovalent hydrocarbon group having typically 1 to 12 carbon atoms, and preferably 1 to 10 carbon atoms. Specific examples of the monovalent hydrocarbon group include: alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; and halogen-substituted alkyl groups such as a chloromethyl group, a 3-chloropropyl group, and a 3,3,3-trifluoropropyl group. A methyl group or a phenyl group is particularly preferable.

Examples of the organohydrogenpolysiloxane as above include 1,1,3,3-tetramethyldisiloxane, 1,3,5,7-tetramethylcyclotetrasiloxane, methylhydrogencyclopolysiloxane, methylhydrogensiloxane-dimethylsiloxane cyclic copolymer, tris(dimethylhydrogensiloxy)methylsilane, tris(dimethylhydrogensiloxy)phenylsilane, methylhydrogenpolysiloxane blocked at both ends with trimethylsiloxy groups, dimethylsiloxane-methylhydrogensiloxane copolymer blocked at both ends with trimethylsiloxy groups, dimethylpolysiloxane blocked at both ends with dimethylhydrogensiloxy groups, dimethylsiloxane-methylhydrogensiloxane copolymer blocked at both ends with dimethylhydrogensiloxy groups, methylhydrogensiloxane-diphenylsiloxane copolymer blocked at both ends with trimethylsiloxy groups, methylhydrogensiloxane-diphenylsiloxane-dimethylsiloxane copolymer blocked at both ends with trimethylsiloxy groups, cyclic methylhydrogenpolysiloxane, cyclic methylhydrogensiloxane-dimethylsiloxane copolymer, cyclic methylhydrogensiloxane-diphenylsiloxane-dimethylsiloxane copolymer, a copolymer composed of a (CH₃)₂HSiO_{1/2} unit and a SiO_{4/2} unit, a copolymer composed of a (CH₃)₂HSiO_{1/2} unit, a SiO_{4/2} unit, and a (C₆H₅)SiO_{3/2} unit, and an organohydrogenpolysiloxane in which a part or all of methyl groups in the above example compounds are substituted with another alkyl group such as an ethyl group and a propyl group or an aryl group such as a phenyl group. Specific examples of the organohydrogenpolysiloxane as above include compounds represented by the following structural formulae.

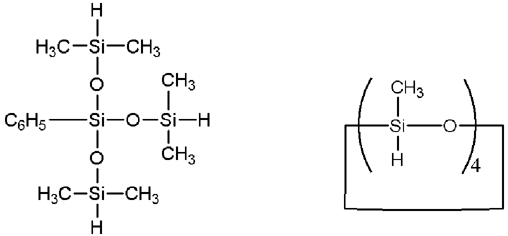

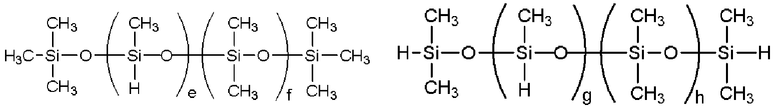

In the formulae, "e" represents an integer of 2 to 200, and "f", "g", and "h" each represent an integer of 0 to 200.

This organohydrogenpolysiloxane has a viscosity at 25°C of preferably 0.5 to 10,000 mPa·s, and particularly preferably 1 to 300 mPa·s.

A blending amount of the component (B) is an amount so that the hydrosilyl groups contained in the composition including the component (B) is 1 to 10 mol (or groups), preferably 1.2 to 9 mol (or groups), and more preferably 1.5 to 8 mol (or groups) per mole (or group) of a sum of alkenyl groups bonded to a silicon atom contained in the composition including the component (A). If the amount of the hydrosilyl groups contained in the composition including the component (B) is less than 1 mol relative to 1 mol of the sum of the alkenyl groups bonded to a silicon atom contained in the composition including the component (A), the addition-curable liquid silicone rubber composition for an airbag is not sufficiently cured. If this amount is more than 10 mol, the cured silicone rubber obtained from the addition-curable liquid silicone rubber composition for an airbag may exhibit considerably deteriorated heat resistance.

The organohydrogenpolysiloxane of the component (B) may be used singly, or may be used in combination of two or more thereof.

### [Component (C)]

The silica fine powder of the component (C) having a BET-method specific surface area of 50 m²/g or more acts as a reinforcing filler. That is, the silica fine powder imparts strength to the cured silicone rubber obtained from the addition-curable liquid silicone rubber composition for an airbag according to the present invention, and use of the silica fine powder as the reinforcing filler enables to form a coating film satisfying strength required in the present invention. The silica fine powder has a specific surface area by a BET method of 50 m²/g or more, preferably 50 to 400 m²/g, or may be more preferably 100 to 300 m²/g. A specific area of less than 50 m²/g cannot impart mechanical strength properties satisfactory as the coating agent for an airbag.

The silica fine powder as above may be known powder conventionally used as a reinforcing filler for a cured silicone rubber as long as the requirement of the specific surface area within the above range. Examples thereof include aerosol silica (fumed silica) and precipitate silica (wet silica).

As the silica fine powder, silica fine powder in which the surface is subjected to a hydrophobizing treatment with a surface-treating agent such as a (typically hydrolysable) organosilicon compound such as, for example, chlorosilane, an alkoxysilane, and an organosilazane may be used. In this case, these silica fine powders may be directly subjected to the surface-hydrophobizing treatment with the surface-treating agent in the powder state in advance for use. The surface-treating agent may be added during kneading with silicone oil (for example, the organopolysiloxane having the alkenyl groups of the component (A)) for the surface-hydrophobizing treatment for use.

Examples of the treating method for the component (C) include a surface treatment by a known technique. For example, the untreated silica fine powder and the surface-treating agent are fed into a sealed mechanical kneader or fluidized bed apparatus at a normal pressure, and in the presence of an inert gas as necessary, a kneading treatment may be performed at a room temperature (25°C) or under a thermal treatment (heating). In some cases, water or a catalyst (such as a hydrolysis enhancer) may be used for enhancing the surface treatment. After the kneading, the mixture can be dried to produce the surface-treated silica fine powder. A blending amount of the surface-treating agent may be any as long the amount is larger than or equal to an amount calculated from a covering area of the surface-treating agent.

Specific examples of the surface-treating agent include: silazanes such as hexamethyldisilazane; silane-coupling agents such as methyltrimethoxysilane, ethyltrimethoxysilane, propyltrimethoxysilane, butyltrimethoxysilane, dimethyldimethoxysilane, diethyldimethoxysilane, vinyltriethoxysilane, vinyltrimethoxysilane, trimethylmethoxysilane, triethylmethoxysilane, vinyltris(methoxyethoxy)silane, trimethylchlorosilane, dimethyldicholosilane, divinyldimethoxysilane, and chloropropyltrimethoxysilane; polymethylsiloxane; and an organohydrogenpolysiloxane. The silica fine powder may be subjected to the surface treatment with these agents for use as the hydrophobic silica fine powder. The surface-treating agent is particularly preferably the silane-coupling agent or silazanes.

When the silica fine powder is directly subjected to the surface-hydrophobizing treatment with a surface-treating agent having an alkenyl group in the powder state in advance for use as the silica fine powder of the component (C), the amount thereof is an amount so that the number of hydrosilyl groups contained in the composition including the component (B) is 1 to 10 mol (or groups), preferably 1.2 to 8 mol (or groups), and more preferably 1.5 to 6 mol (or groups) relative to 1 mol (or group) of the alkenyl groups bonded to a silicon atom contained in the composition including the component (A) and the surface-treating agent for the component (C).

This is because a number of the hydrosilyl groups relative to 1 mol of the alkenyl groups bonded to a silicon atom in the addition-curable liquid silicone rubber composition for an airbag of less than 1 mol may fail to sufficiently cure the addition-curable liquid silicone rubber composition for an airbag to fail to exhibit sufficient adhesiveness, and meanwhile, an amount of the hydrosilyl groups of more than 10 mol may considerably deteriorate heat resistance of the cured silicone rubber obtained from the addition-curable liquid silicone rubber composition for an airbag.

A blending amount of the component (C) is 1 to 50 parts by mass, preferably 3 to 30 parts by mass, and more preferably 5 to 25 parts by mass relative to 100 parts by mass of the organopolysiloxane of the component (A). A blending amount of less than 1 part by mass fails to yield the cured silicone rubber having sufficient strength. A blending amount of more than 30 parts by mass may increase the viscosity of the obtained addition-curable liquid silicone rubber composition for an airbag and decrease flowability to deteriorate coating operation.

The silica fine powder of the component (C) may be used singly, or may be used in combination of two or more thereof.

### [Component (D)]

The catalyst for a hydrosilylation reaction of the component (D) enhances an addition reaction mainly between the alkenyl groups bonded to a silicon atom in the component (A) and the hydrosilyl groups in the component (B). This catalyst for a hydrosilylation reaction is not particularly limited, and examples thereof include: platinum-group metals such as platinum, palladium, and rhodium; chloroplatinic acid; alcohol-modified chloroplatinic acids; coordinated compounds between chloroplatinic acid and olefins, vinylsiloxane, or an acetylene compound; and platinum-group metal compounds such as tetrakis(triphenylphosphine)palladium and chlorotris(triphenylphosphine)rhodium. The component (D) is preferably a platinum-group metal compound.

A blending amount of the component (D) is 1 to 500 ppm, and preferably 5 to 100 ppm in terms of a mass of a catalyst metal element relative to a mass of the component (A). If this blending amount is less than 1 ppm, the addition reaction becomes considerably slow, or the addition-curable liquid silicone rubber composition for an airbag is not cured, which is unpreferable. A blending amount of more than 500 ppm causes a risk of deterioration in heat resistance of the cured silicone rubber.

The catalyst for a hydrosilylation reaction of the component (D) may be used singly, or may be used in combination of two or more thereof.

### [Component (E)]

The component (E) is an organosilicon compound having an adhesiveness-imparting functional group, and added to exhibit and improve adhesiveness of the addition-curable liquid silicone rubber composition for an airbag to the base fabric for an airbag.

As the component (E), any organosilicon compound having an adhesiveness-imparting functional group may be used, but the organosilicon compound is preferably an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, in one molecule.

The alkoxy group bonded to a silicon atom (the alkoxysilyl group) is preferably bonded to the silicon atom to form, for example: a trialkoxysilyl group such as a trimethoxysilyl group and triethoxysilyl group; or an alkyldialkoxysilyl group such as a methyldimethoxysilyl group, an ethyldimethoxysilyl group, a methyldiethoxysilyl group, and an ethyldiethoxysilyl group. The epoxy group is preferably bonded to the silicon atom in a form of, for example: a glycidoxyalkyl group such as a glycidoxypropyl group; and an epoxy-containing cyclohexylalkyl group such as 2,3-epoxycyclohexylethyl group and a 3,4-epoxycyclohexylethyl group.

Examples of the organosilicon compound of the component (E) include: epoxy-group-containing silane-coupling agents (namely epoxy-functional-group-containing organoalkoxysilanes) such as γ-glycidoxypropyltriethoxysilane, γ-glycidoxypropylmethyldiethoxysilane, (3,4-epoxycyclohexylethyl)trimethoxysilane, (3,4-epoxycyclohexylethyl)triethoxysilane, (3,4-epoxycyclohexylethyl)methyldimethoxysilane, (3,4-epoxycyclohexylethyl)methyldiethoxysilane, (2,3-epoxycyclohexylethyl)triethoxysilane, (2,3-epoxycyclohexylethyl)methyldimethoxysilane, and (2,3-epoxycyclohexylethyl)methyldiethoxysilane; or (meth)acryl-group-containing silane-coupling agents such as 3-acryloxypropyltrimethoxysilane and 3-methacryloxypropyltrimethoxysilane; or isocyanate-group-containing silane-coupling agents such as 3-isocyanatepropyltriethoxysilane and 3-isocyanatepropyltrimethoxysilane; or cyclic organopolysiloxanes having an epoxy group, represented by the following chemical formulae; or organosilicon compounds such as a linear organopolysiloxane having an epoxy group; or a mixture of two or more thereof or a partially hydrolyzed condensate of one or two or more thereof.

The major compounds are exemplified below.

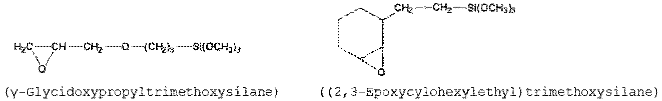

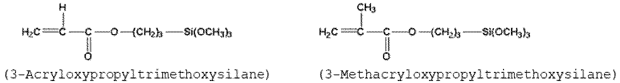

O=C=N-(CH₂)₃-Si(OCH₂CH₃)₃

(3-Isocyanatepropyltrimethoxysilane)

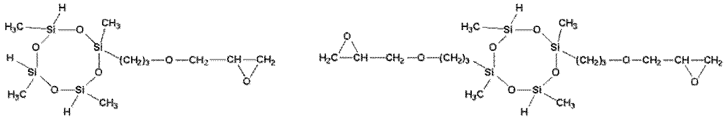

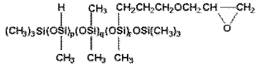

In the formula, "p" represents an integer of 1 to 40, "q" represents an integer of 0 to 40, and "r" represents an integer of 1 to 40, and preferably an integer of 1 to 20.

A blending amount of the component (E) is 0.1 to 10 parts by mass, and preferably 0.15 to 5 parts by mass relative to 100 parts by mass of the organopolysiloxane of the component (A). If the blending amount is less than 0.1 part by mass, the obtained addition-curable liquid silicone rubber composition for an airbag may fail to exhibit sufficient adhesiveness. If the blending amount is more than 10 parts by mass, thixotropy of the addition-curable liquid silicone rubber composition for an airbag may increase to decrease the flowability and deteriorate coating operability.

When the component (E) has an alkenyl group and/or a hydrosilyl group, the blending amount is an amount so that the sum of the hydrosilyl group contained in the composition including the component (B) and the component (E) is 1 to 10 mol (or groups), preferably 1.2 to 8 mol (or groups), and more preferably 1.5 to 6 mol (or groups) relative to 1 mol (or group) of the sum of the alkenyl groups bonded to a silicon atom contained in the composition including the component (A), the component (C), and the component (E).

This is because a number of the hydrosilyl groups relative to 1 mol of the alkenyl groups bonded to a silicon atom in the addition-curable liquid silicone rubber composition for an airbag of less than 1 mol may fail to sufficiently cure the addition-curable liquid silicone rubber composition for an airbag to fail to exhibit sufficient adhesiveness, and meanwhile, an amount of the hydrosilyl groups of more than 10 mol may considerably deteriorate heat resistance of the cured silicone rubber obtained from the addition-curable liquid silicone rubber composition for an airbag.

The component (E) may be used singly, or may be used in combination of two or more thereof.

### [Component (F)]

The component (F) is a metal carboxylate salt, and acts as a flame retardancy improver. A blending amount of the component (F) is 100 to 5,000 ppm, preferably 120 to 3,000 ppm, and more preferably 150 to 2,000 ppm in terms of a mass of a center metal relative to the mass of the component (A). A blending amount of the component (F) of less than 100 ppm may fail to yield the sufficient effect of improving flame retardancy, and a blending amount of more than 5,000 ppm may increase the viscosity of the composition to deteriorate coating operability.

The metal carboxylate salt of the component (F) is preferably a metal salt of a carboxylic acid having 6 or more carbon atoms, including a carbon atom of the carbonyl group. The metal salt of the carboxylic acid having 6 or more carbon atoms improves compatibility with the silicone rubber composition, and thus, the metal salt can be easily dispersed. An upper limit of the number of carbon atoms of the carboxylic acid is not particularly limited, and may be 20 or less, for example.

A center metal ion of the metal carboxylate salt of the compound (F) is not particularly limited, and a lithium ion, a potassium ion, a calcium ion, a titanium ion, an iron ion, a cobalt ion, a nickel ion, a copper ion, a zinc ion, a zirconium ion, a tin ion, a lead ion, etc. may be used, for example, but a trivalent iron ion is preferable. The carboxylate salt with the trivalent iron ion is inexpensively available.

Specific examples of the component (F) include: 2-ethylhexanoate salts such as lithium (I) 2-ethylhexanoate, potassium (I) 2-ethylhexanoate, calcium (II) bis(2-ethylhexanoate), titanium (IV) tetrakis(2-ethylhexanoate), manganese (II) bis(2-ethylhexanoate), iron (III) tris(2-ethylhexanoate), cobalt (II) bis(2-ethylhexanoate), nickel (II) bis(2-ethylhexanoate), zinc (II) bis(2-ethylhexanoate), zirconium (II) bis(2-ethylhexanoate), tin (II) bis(2-ethylhexanoate), and lead (II) bis(2-ethylhexanoate); and stearate salts such as lithium (I) stearate, potassium (I) stearate, calcium (II) bis(stearate), titanium (IV) tetrakis(stearate), manganese (II) bis(stearate), iron (III) tris(stearate), cobalt (II) bis(stearate), nickel (II) bis(stearate), zinc (II) bis(stearate), zirconium (II) bis(stearate), tin (II) bis(stearate), and lead (II) bis(stearate), and iron (III) tris(2-ethylhexanoate), cobalt (II) bis(2-ethylhexanoate), and potassium (I) 2-ethylhexanoate are particularly preferable.

The component (F) may be used singly, or may be used in combination of two or more thereof.

### [Other Components]

In the addition-curable liquid silicone rubber composition for an airbag according to the present invention, other optional components may be blended according to the purpose in addition to the components (A) to (F). Specific examples thereof include the following components. Each of these other components may be used singly, or may be used in combination of two or more thereof.

### [Component (G)]

As the component (G), one or more condensation catalysts selected from an organotitanium compound, an organozirconium compound, and an organoaluminum compound may be further contained. The component (G) is preferably one or more selected from a titanium-alkoxide complex, a titanium chelate complex, a zirconium-alkoxide complex, and a zirconium chelate complex, and acts a condensation catalyst of the adhesiveness-imparting functional group in the component (E) for adhesive enhancement.

Specific examples of the component (G) include: titanium-alkoxide complexes such as titanium tetraisopropoxide, titanium tetranormalbutoxide, and titanium tetra-2-ethylhexoxide; titanium chelate complexes such as titanium diisopropoxy bis(acetylacetonate), titanium diisopropoxy bis(ethylacetoacetate), and titanium tetraacetylacetonate; zirconium-alkoxide complexes such as zirconium tetranormalpropoxide and zirconium tetranormalbutoxide; and zirconium chelate complexes such as zirconium tributoxy monoacetylacetonate, zirconium monobutoxy acetylacetonate bis(ethylacetoacetate), and zirconium tetraacetylacetonate.

The one or more condensation catalysts selected from the organotitanium compound, the organozirconium compound, and the organoaluminum compound of the component (G) are an optional component blended as necessary, and a blending amount thereof is preferably 0.05 to 5 parts by mass, and more preferably 0.1 to 2 parts by mass relative to 100 parts by mass of the component (A). The blending amount within the range of 0.05 to 5 parts by mass yields the cured product obtained from the addition-curable liquid silicone rubber composition for an airbag having excellent adhesiveness to the base fabric for an airbag.

The component (G) may be used singly, or may be used in combination of two or more thereof.

### [Component (H)]

As the component (H), a powdery organopolysiloxane resin having three-dimensional network structure (provided that the organopolysiloxane resin has no hydrogen atom bonded to a silicon atom) may be further contained. The component (H) is an organopolysiloxane resin having three-dimensional network (resin-like) structure. The component (H) is preferably composed of basically one or more branched siloxane units selected from a trifunctional R²SiO_{3/2} unit and a tetrafunctional SiO_{4/2} unit, and may optionally have a monofunctional R²₃SiO_{1/2} unit and/or a bifunctional R²₂SiO_{2/2} as necessary. The organopolysiloxane resin acts as a flame retardancy improver. This organopolysiloxane resin may have an alkenyl group bonded to a silicon atom in the molecule, but does not have a hydrogen atom bonded to a silicon atom (a hydrosilyl group). This organopolysiloxane resin has the three-dimensional network (resin-like) structure and is powdery at 25°C, and thus, clearly differentiated from the component (A) basically having a linear structure and being liquid at 25°C.

R² in the above formulae independently represents a monovalent hydrocarbon group having 1 to 10 carbon atoms, and preferably 1 to 8 carbon atoms. Examples thereof include the same groups as the alkenyl groups and monovalent hydrocarbon groups exemplified in the component (A). Specific examples thereof include: alkenyl groups such as a vinyl group, an allyl group, a propenyl group, a butenyl group, a pentenyl group, a hexenyl group, a cyclohexenyl group, and a heptenyl group; alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; and halogen-substituted alkyl groups such as a chloromethyl group, a 3-chloropropyl group, and a 3,3,3-trifluoropropyl group. A methyl group and a vinyl group are particularly preferable.

A content of the alkenyl groups bonded to a silicon atom in the component (H) is preferably 0 to 10 mol%, and particularly preferably about 2 to 8 mol% relative to the entirety of substituents bonded to a silicon atom.

The organopolysiloxane resin of the component (H) preferably has the R²SiO_{3/2} unit and/or the SiO_{4/2} unit, and a total amount thereof is preferably 20 to 75 mol%, and particularly preferably 30 to 65 mol% in the organopolysiloxane resin of the component (H).

Here, the organopolysiloxane resin of the component (H) may optionally have the R²₃SiO_{1/2} unit and/or the R²₂SiO_{2/2} unit, as noted above. A total content thereof is preferably 0 to 70 mol%, and particularly preferably 0 to 50 mol% in the organopolysiloxane resin of the component (H).

When the total content of the R²SiO_{3/2} unit and/or the SiO_{4/2} unit in the organopolysiloxane resin of the component (H) is within the range of 20 to 75 mol%, the sufficient effect of improving flame retardancy is obtained, which is preferable.

The weight-average molecular weight of the organopolysiloxane resin of the component (H) in terms of polystyrene by gel permeation chromatography (GPC) analysis with tetrahydrofuran (THF) as a developing solvent is preferably within a range of 2,000 to 50,000, and particularly preferably 4,000 to 20,000. The weight-average molecular weight within the range of 2,000 to 50,000 yields the sufficient effect of improving flame retardancy, and yields viscosity of the addition-curable liquid silicone rubber composition for an airbag having good coating operability. Note that this weight-average molecular weight is a value determined by GPC analysis under the same condition as used in determining the polymerization degree of the component (A).

Specific examples of the organopolysiloxane resin of the component (H) include: an organosiloxane copolymer composed of a siloxane unit represented by the formula: R'₃SiO_{1/2}, a siloxane unit represented by the formula: R'₂R"SiO_{1/2}, a siloxane unit represented by the formula: R'₂SiO_{2/2}, and a siloxane unit represented by the formula: SiO_{4/2}; an organosiloxane copolymer composed of a siloxane unit represented by the formula: R'₃SiO_{1/2}, a siloxane unit represented by the formula: R'₂R"SiO_{1/2}, and a siloxane unit represented by the formula: SiO_{4/2}; an organosiloxane copolymer composed of a siloxane unit represented by the formula: R'₂R"SiO_{1/2}, a siloxane unit represented by the formula: R'₂SiO_{2/2}, and a siloxane unit represented by the formula: SiO_{4/2}; an organosiloxane copolymer composed of a siloxane unit represented by the formula: R'R"SiO_{2/2} and a siloxane unit represented by the formula: R'SiO_{3/2} or a siloxane unit represented by the formula: R"SiO_{3/2}; and a mixture composed of two or more of these organopolysiloxanes.

R' in the above formulae represents an unsubstituted or substituted monovalent hydrocarbon group having 1 to 10, preferably 1 to 8, carbon atoms, which is same as or different from each other and excludes an alkenyl group. Examples thereof include: alkyl groups such as a methyl group, an ethyl group, a propyl group, a butyl group, a pentyl group, a hexyl group, a cyclohexyl group, and a heptyl group; aryl groups such as a phenyl group, a tolyl group, a xylyl group, and a naphthyl group; aralkyl groups such as a benzyl group and a phenethyl group; and halogenated alkyl groups such as a chloromethyl group, a 3-chloropropyl group, and a 3,3,3-trifluoropropyl group. A methyl group is particularly preferable. R" in the above formulae represents an alkenyl group. Examples thereof include a vinyl group, an allyl group, a butenyl group, a pentenyl group, a hexenyl group, and a heptenyl group, and a vinyl group is particularly preferable.

A blending amount of the component (H) is preferably 0.1 to 100 parts by mass, more preferably 2.5 to 90 parts by mass, and particularly preferably 5 to 80 parts by mass relative to 100 parts by mass of the organopolysiloxane of the component (A). The blending amount within the range of 0.1 to 100 parts by mass yields the sufficient effect of improving flame retardancy, which is excellent cost-effectiveness.

When the component (H) has an alkenyl group, the amount is an amount so that the hydrosilyl groups contained in the composition is 1 to 10 mol per mol of the sum of the alkenyl groups bonded to a silicon atom contained in the composition. For example, the amount of the component (H) is an amount so that the hydrosilyl groups contained in the component (B) and the component (E) is 1 to 10 mol (or groups), may be preferably 1.2 to 8 mol (or groups), and more preferably 1.5 to 6 mol (or groups), relative to 1 mol of the sum of the alkenyl groups bonded to a silicon atom contained in the component (A), the component (C), the component (E), and the component (H) in the composition. This is because a total number of the hydrosilyl groups relative to 1 mol of the sum of the alkenyl groups bonded to a silicon atom in the composition of less than 1 mol may fail to sufficiently cure the addition-curable liquid silicone rubber composition for an airbag to fail to exhibit sufficient adhesiveness, and meanwhile, a total amount of the hydrosilyl groups of more than 10 mol may considerably deteriorate heat resistance of the cured silicone rubber obtained from the addition-curable liquid silicone rubber composition for an airbag.

As above, each component is blended so that the total number of moles of the hydrosilyl group relative to 1 mol of the sum of the alkenyl groups bonded to a silicon atom in each component contained in the addition-curable liquid silicone rubber composition for an airbag is 1 to 10 mol in the present invention.

The organopolysiloxane resin of the component (H) having three-dimensional network structure may be used singly or in combination of two or more thereof.

### • Reaction-Controlling Agent

The reaction-controlling agent is not particularly limited as long as it is a compound having an effect of inhibiting curing against the catalyst for a hydrosilylation reaction of the component (D), and known compounds may be used. Specific examples thereof include: phosphorus-containing compounds such as triphenylphosphine; nitrogen-containing compounds such as tributylamine, tetramethylethylenediamine, and benzotriazole; sulfur-containing compounds; acetylenic compounds such as acetylene alcohols; compounds having two or more alkenyl groups; hydroperoxide compounds; and maleic acid derivatives.

A degree of the effect of inhibiting curing due to the reaction-controlling agent varies depending on the chemical structure of the reaction-controlling agent, and thus, an addition amount of the reaction-controlling agent is preferably regulated to an optimal amount for each of the used reaction-controlling agent. Adding the reaction-controlling agent at the optimal amount allows the addition-curable liquid silicone rubber composition for an airbag to have excellent long-term storage stability at room temperature and curability.

### • Non-Reinforcing Filler

Examples of a filler other than the surface-treated silica fine powder of the component (C) include: fillers such as crystalline silica (for example, quartz powder having a specific surface area by a BET method of less than 50 m²/g), a hollow filler made of an organic resin, polymethylsilsesquioxane fine powder (so-called silicone resin powder), fumed titanium dioxide, magnesium oxide, zinc oxide, iron oxide, aluminum hydroxide, magnesium carbonate, calcium carbonate, zinc carbonate, carbon black, diatomaceous earth, talc, kaolinite, and glass fiber; fillers in which these fillers are subjected to a surface-hydrophobizing treatment with an organosilicon compound such as an organoalkoxysilane compound, an organochlorosilane compound, an organosilazane compound, and a low-molecular-weight siloxane compound; silicone rubber powder; and silicone resin powder.

### • Other Components

In addition to the above, an organopolysiloxane having one hydrogen atom bonded to a silicon atom in one molecule and having no other functional group, an organopolysiloxane having one alkenyl group bonded to a silicon atom in one molecule and having no other functional group, a non-functional organopolysiloxane having none of a hydrogen atom bonded to a silicon atom, an alkenyl group bonded to a silicon atom, and another functional group (so-called dimethylsilicone oil), an organic solvent, a creep-hardening inhibitor, a plasticizer, a thixotropy-imparting agent, a pigment, a dye, an antifungal agent, etc. may be blended, for example.

### <Preparation of Addition-Curable Liquid Silicone Rubber Composition for Airbag>

The above components (A) to (F), and the component (G), the component (H), and other components further blended as necessary are uniformly mixed to prepare the addition-curable liquid silicone rubber composition for an airbag.

The addition-curable liquid silicone rubber composition for an airbag obtained as above is a liquid composition at 25°C, and the viscosity at 25°C is preferably 1 to 500 Pa·s, more preferably 2 to 400 Pa·s, and further preferably 5 to 300 Pa·s. The viscosity at 25°C within the above range hardly causes coating unevenness and insufficient adhesiveness to the base fabric after curing during applying on the base fabric for an airbag, and thus, preferably used.

### <Base Fabric for Airbag>

As the base fabric (the substrate composed of fibric cloth) for an airbag on which the silicone rubber layer is to be formed, known materials are typically used. Specific examples thereof include woven texture of synthetic fibers such as polyamide fibers such as 6,6-nylon, 6-nylon, and aramid fiber, and polyester fibers such as polyethylene terephthalate (PET) and polybutylene terephthalate (PBT).

### <Airbag>

The airbag of the present invention includes a cured coating film of the above addition-curable liquid silicone rubber composition for an airbag on the base fabric for an airbag.

### <Method for Producing Airbag>

The above addition-curable liquid silicone rubber composition for an airbag is applied on one surface or both surfaces, specifically only one surface, of the base fabric (the substrate composed of fibric cloth) for an airbag, and then the composition is heated and cured with a drying furnace, etc. to form the silicone rubber layer (the cured coating film). The silicone rubber coating base fabric for an airbag obtained as above can be used to produce the airbag.

Here, a common method can be adopted as a method for coating the base fabric for an airbag with the addition-curable liquid silicone rubber composition for an airbag, and coating with a knife coater is preferable. A thickness of the coating layer (or a surface applying amount) is typically 5 to 100 g/m², and may be preferably 8 to 90 g/m², and more preferably 10 to 80 g/m².

The addition-curable liquid silicone rubber composition for an airbag can be cured under a known curing condition by a known curing method. Specifically, the composition can be cured by heating at 100 to 200°C for 1 to 30 minutes, for example.

Methods for processing the base fabric for an airbag having the silicone rubber layer on one surface or both surfaces (the silicone rubber coating base fabric for an airbag) produced as above into the airbag include a method in which outer peripheries of two of the above silicone rubber coating base fabrics for an airbag are adhered to each other with an adhesive, as the surface coated with the silicone rubber being an inside, and then the adhesive layer is sewn together to produce the airbag. Alternatively, a method in which both outer surfaces of the base fabric for an airbag produced in advance by double-weaving is coated with the addition-curable liquid silicone rubber composition for an airbag at a predetermined coating amount as above, and the composition is cured under a predetermined curing condition may be adopted. As the adhesive used here, a known adhesive may be used, but a silicone adhesive called "seam sealant" is preferable in terms of adhesiveness, adhesion durability, etc.

### EXAMPLE

Hereinafter, the present invention will be specifically described with showing Preparation Examples, Examples, and Comparative Examples, but the present invention is not limited to the following Examples.

The following components were used as the component (A).
(A-1): A linear dimethylpolysiloxane blocked at both ends of the molecular chain with vinyldimethylsiloxy groups, and having a weight-average polymerization degree of 700 and a viscosity of 30,000 mPa·s.
(A-2): A linear dimethyl-vinylmethylpolysiloxane blocked at both ends of the molecular chain with trimethylsiloxy groups, having a weight-average polymerization degree of 200 and a viscosity of 700 mPa·s, and containing a vinylmethylsiloxane unit at 5 mol% and a dimethylsiloxane unit at 95 mol% in the bifunctional diorganosiloxane units constituting the main chain.
(A-3) A linear dimethylpolysiloxane blocked at both ends of the molecular chain with vinyldimethylsiloxy groups, and having a weight-average polymerization degree of 200 and a viscosity of 1,000 mPa·s.
(A-4) A linear dimethylpolysiloxane blocked at both ends of the molecular chain with vinyldimethylsiloxy groups, and having a weight-average polymerization degree of 450 and a viscosity of 5,000 mPa·s.

The following components were used as the component (B).
(B-1): A linear dimethylsiloxane-methylhydrogensiloxane copolymer blocked at both ends of the molecular chain with trimethylsiloxy groups, and having a weight-average polymerization degree of 64 and a viscosity of 45 mPa·s (hydrosilyl group content: 0.011 mol/g).
(B-2): A linear methylhydrogenpolysiloxane blocked at both ends of the molecular chain with trimethylsiloxy groups, and having a weight-average polymerization degree of 40 and a viscosity of 20 mPa·s (hydrosilyl group content: 0.017 mol/g).

The following component was used as the component (C).
(C): Silica fine powder having a specific surface area by a BET method of 300 m²/g (trade name: Aerosil 300, available from NIPPON AEROSIL CO., LTD.)

The following component was used as the component (D) .
(D): A dimethylpolysiloxane solution containing a chloroplatinic acid/1,3-divinyltetramethyldisiloxane complex at 1 mass% of in terms of a platinum atom content.

The following component was used as the component (E) .
(E): γ-Glycidoxypropyltrimethoxysilane

The following components were used as the component (F).
(F-1): Iron (III) tris(2-ethylhexanoate), a mineral spirit solution (trade name: Nikka Octix Iron, iron content: 6%, available from NIHON KAGAKU SANGYO CO., LTD.)
(F-2): Cobalt (II) bis(2-ethylhexanoate), a mineral spirit solution (trade name: Nikka Octix Cobalt, cobalt content: 12%, available from NIHON KAGAKU SANGYO CO., LTD.)
(F-3): Potassium (I) 2-ethylhexanoate (trade name: Nikka Octix Potassium, potassium content: 10%, available from NIHON KAGAKU SANGYO CO., LTD.)

The following component was used as the component (G).
(G): Zirconium tetraacetylacetonate (trade name: ZC-162, available from Matsumoto Fine Chemical Co., Ltd.)

The following component was used as the component (H).
(H): A powdery organopolysiloxane resin having three-dimensional network structure composed of a (CH₃)₃SiO_{1/2} unit, a (CH₃)(CH₂=CH)SiO_{2/2} unit, and a SiO_{4/2} unit, having a weight-average molecular weight of 5,500, having a Q unit content rate of 56 mol%, and having an alkenyl group content of 6.7 mol% relative to the entirety of substituents bonded to a silicon atom.

The following component was used as a flame retardant.
Iron (III) oxide (trade name: TODA COLOR 130ED, TODA PIGMENT CORP.)

The following component was used as a reaction-controlling agent.
(Reaction-controlling agent): 1-Ethynylcyclohexanol

### [Preparation Example 1]

Into a kneader, 60 parts by mass of the base oil (A-1), 8 parts by mass of hexamethyldisilazane, 2 parts by mass of water, and 40 parts by mass of the silica fine powder (C) were fed, and the mixture was mixed at room temperature for 1 hour. Thereafter, 8 parts by mass of hexamethyldisilazane was added, and the mixture was further mixed at room temperature for 1 hour. Thereafter, the temperature was raised to 150°C, and the mixture was continuously mixed for 2 hours. Thereafter, 25 parts by mass of the base oil (A-1) and 5 parts by mass of the base oil (A-2) were added, and the mixture was mixed until the mixture became uniform to obtain a base compound.

### [Examples 1 to 7 and Comparative Examples 1 to 6]

The components were mixed at blending ratios in Tables 1 and 2 with a mixer at room temperature for 30 minutes to prepare addition-curable liquid silicone rubber compositions for an airbag.

### <Method for Preparing Silicone Rubber Coating Base Fabric>

A PET base fabric with 470 denier was coated with each of the silicone rubber coating compositions for an airbag prepared with Tables 1 and 2 by knife coating with a lab coater available from Mathis AG (trade name; LTE-S) so that the applying amount was 20 g/m². Thereafter, the base fabric was placed in a dryer at 200°C for 1 minute, and the silicone rubber coating composition was cured to prepare a silicone rubber coating base fabric.

### <Method for Evaluating Color Unevenness of Silicone Rubber Coating Base Fabric>

The applied surface (25 cm × 25 cm) of the silicone rubber coating base fabric prepared above was visually observed. A case where no color unevenness was observed was evaluated as "passing", and a case where color unevenness was observed was evaluated as "failure". Tables 1 and 2 show the results.

### <Method for Flame Retardancy Test>

In accordance with a method described in Federal Moter Vehicle Safety Standard-302 (FMVSS-302), the flame retardancy was evaluated. Specifically, each of the silicone rubber coating base fabrics prepared above was cut to a size of 10 cm in width × 35 cm in length. Thereafter, the silicone rubber coating surface was placed upward, and a combustion distance and a combustion time until flame disappeared in combustion in accordance with the method described in FMVSS-302 were measured. From these combustion distance and combustion time, a combustion rate was calculated. In this time, a specimen in any one of cases where (1) the specimen was not ignited or self-extinguished (SE) before the A bench mark, (2) the specimen was self-extinguished (SE) with a combustion distance of 51 mm or less (and 60 seconds or less), and (3) the combustion rate was 102 mm/min or less was evaluated as flame retardancy passing. The test was performed with N=10, and a case where all the tests were passing was evaluated as "passing", and a case where even one test was failure was evaluated as "failure". Tables 1 and 2 show the results. In addition, a self-extinguishment rate (an SE rate) was determined by the following formula, and Tables 1 and 2 show the results. Note that a higher SE rate is regarded as better flame retardancy. SE rate (%) = [(A number (1) of specimens in which the specimen was not ignited or self-extinguished before the A bench mark + A number (2) of specimens in which the specimen was self-extinguished with a combustion distance of 51 mm or less (and 60 seconds or less) )/10] × 100

**[Table 1]**

| | Component | Example 1 | Example 2 | Example 3 | Example 4 | Example 5 | Example 6 | Example 7 |
|---|---|---|---|---|---|---|---|---|
| Base compound | A-1 | 46.0 | 46.0 | 46.0 | 46.0 | 46.0 | 49.1 | 63.0 |
| | A-2 | 2.7 | 2.7 | 2.7 | 2.7 | 2.7 | 2.9 | 3.7 |
| | C | 21.6 | 21.6 | 21.6 | 21.6 | 21.6 | 23.1 | 29.6 |
| Base oil | A-3 | 51.3 | 51.3 | 51.3 | 51.3 | 51.3 | 42.6 | 16.0 |
| | A-4 | | | | | | 5.36 | 17.3 |
| Crosslinking agent | B-1 | 4.3 | 4.3 | 4.3 | 4.3 | 4.3 | 6.2 | 10.3 |
| | B-2 | 0.25 | 0.25 | 0.25 | 0.25 | 0.25 | 0.27 | 0.34 |
| Platinum catalyst | D | 0.23 | 0.23 | 0.23 | 0.23 | 0.23 | 0.24 | 0.31 |
| Curing-controlling agent | 1-Ethynylcyclohexanol | 0.05 | 0.05 | 0.05 | 0.05 | 0.05 | 0.05 | 0.06 |
| Adhesion auxiliary | E | 0.28 | 0.28 | 0.28 | 0.28 | 0.28 | 0.30 | 0.39 |
| Metal carboxylate salt | F-1 | 1.50 | | | 0.33 | 0.33 | 1.50 | 1.50 |
| | F-2 | | 0.75 | | | | | |
| | F-3 | | | 0.90 | | | | |
| Adhesion enhancer | G | 0.15 | 0.15 | 0.15 | 0.15 | 0.15 | 0.16 | 0.21 |
| Organopolysiloxane resin having three-dimensional network structure | H | | | | | | 5.4 | 17.2 |
| Hydrosilyl groups in entire composition / vinyl groups in entire composition | | 4.9 | 4.9 | 4.9 | 4.9 | 4.9 | 5.1 | 4.9 |
| Metal content of component F or flame retardant in terms of mass relative to mass of component (A) [ppm] | | 900 | 900 | 900 | 200 | 2000 | 900 | 900 |
| Viscosity of composition [Pa·s] | | 43 | 34 | 40 | 38 | 52 | 59 | 72 |
| Color unevenness | | Passing | Passing | Passing | Passing | Passing | Passing | Passing |
| FMVSS-302 flame retardancy test | Result of flame retardancy test | Passing | Passing | Passing | Passing | Passing | Passing | Passing |
| | SE rate [%] | 100 | 70 | 60 | 50 | 100 | 100 | 100 |

**[Table 2]**

| | Component | Comparative Example 1 | Comparative Example 2 | Comparative Example 3 | Comparative Example 4 | Comparative Example 5 | Comparative Example 6 |
|---|---|---|---|---|---|---|---|
| Base compound | A-1 | 46.0 | 63.0 | 46.0 | 46.0 | 46.0 | 49.1 |
| | A-2 | 2.7 | 3.7 | 2.7 | 2.7 | 2.7 | 2.9 |
| | C | 21.6 | 29.6 | 21.6 | 21.6 | 21.6 | 23.1 |
| Base oil | A-3 | 51.3 | 16.0 | 51.3 | 51.3 | 51.3 | 42.6 |
| | A-4 | | 17.2 | | | | 5.4 |
| Crosslinking agent | B-1 | 4.3 | 10.3 | 4.3 | 4.3 | 4.3 | 6.2 |
| | B-2 | 0.25 | 0.34 | 0.25 | 0.25 | 0.25 | 0.27 |
| Platinum catalyst | D | 0.23 | 0.31 | | 0.23 | 0.23 | 0.24 |
| Curing-controlling agent | 1-Ethynylcyclohexanol | 0.05 | 0.06 | 0.05 | 0.05 | 0.05 | 0.05 |
| Adhesion auxiliary | E | 0.28 | 0.39 | 0.23 0.28 | 0.28 | 0.28 | 0.30 |
| Metal carboxylate salt | F-1 | | | 0.09 | | | |
| | F-2 | | | | | | |
| | F-3 | | | | | | |
| Flame retardant | Iron oxide | | | | 0.26 | 1.14 | 1.22 |
| Adhesion enhancer | G | 0.15 | 0.21 | 0.15 | 0.15 | 0.15 | 0.16 |
| Organopolysiloxane resin having three-dimensional network structure | H | | 17.2 | | | | 5.4 |
| Hydrosilyl groups in entire composition / vinyl groups in entire composition | | 4.9 | 4.9 | 4.9 | 4.9 | 4.9 | 5.1 |
| Metal content of component F or flame retardant in terms of mass relative to mass of component (A) [ppm] | | - | - | 54 | 900 | 4000 | 4000 |
| viscosity of composition [Pa·s] | | 36 | 64 | 38 | 39 | 41 | 62 |
| Color unevenness | | Passing | Passing | Passing | Passing | Failure | Failure |
| FMVSS-302 flame retardancy test | Result of flame retardancy test | Failure | Failure | Failure | Failure | Failure | Passing |
| | SE rate [%] | 0 | 0 | 20 | 0 | 20 | 80 |

As understood from Table 1, Examples 1 to 7, which used the addition-curable liquid silicone rubber composition for an airbag of the present invention, caused no color unevenness during coating. In addition, Examples 1 to 7 resulted in the excellent flame retardancy test.

Meanwhile, as understood from Table 2, Comparative Examples 1 to 6, which did not use the addition-curable liquid silicone rubber composition for an airbag of the present invention, resulted in poor flame retardancy compared with Examples or caused color unevenness during coating.

The present description includes the following embodiments.
[1]: An addition-curable liquid silicone rubber composition for an airbag, the composition comprising:
   (A) 100 parts by mass of an organopolysiloxane having two or more alkenyl groups bonded to a silicon atom in one molecule and having a polymerization degree of 50 to 2,000;
   (B) an organohydrogenpolysiloxane having two or more hydrogen atoms bonded to a silicon atom (hydrosilyl groups) in one molecule at an amount so that the hydrosilyl groups contained in the composition is 1 to 10 mol per mole of a sum of alkenyl groups bonded to a silicon atom contained in the composition;
   (C) 1 to 50 parts by mass of silica fine powder having a BET-method specific surface area of 50 m²/g or more;
   (D) a catalyst for a hydrosilylation reaction at 1 to 500 ppm in terms of a mass of a catalyst metal element relative to a mass of the component (A);
   (E) 0.1 to 10 parts by mass of an organosilicon compound having an adhesiveness-imparting functional group; and
   (F) a metal carboxylate salt at 100 to 5,000 ppm in terms of a mass of a center metal relative to the mass of the component (A).
[2]: The addition-curable liquid silicone rubber composition for an airbag according to the above [1], wherein the component (E) is an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, in one molecule.
[3]: The addition-curable liquid silicone rubber composition for an airbag according to the above [1] or [2], further comprising, as a component (G), one or more condensation catalysts selected from an organotitanium compound, an organozirconium compound, and an organoaluminum compound at 0.05 to 5 parts by mass relative to 100 parts by mass of the component (A).
[4]: The addition-curable liquid silicone rubber composition for an airbag according to any one of the above [1] to [3], wherein the metal carboxylate salt of the component (F) is a metal salt of a carboxylic acid having 6 or more carbon atoms.
[5]: The addition-curable liquid silicone rubber composition for an airbag according to any one of the above [1] to [4], wherein a center metal ion of the metal carboxylate salt of the component (F) is a trivalent iron ion.
[6]: The addition-curable liquid silicone rubber composition for an airbag according to any one of the above [1] to [5], further comprising, as a component (H), a powdery organopolysiloxane resin having three-dimensional network structure (provided that the organopolysiloxane resin has no hydrogen atom bonded to a silicon atom) at 0.1 to 100 parts by mass relative to 100 parts by mass of the component (A).
[7]: An airbag, comprising a cured coating film of the addition-curable liquid silicone rubber composition for an airbag according to any one of the above [1] to [6] on a base fabric for an airbag.

It should be noted that the present invention is not limited to the above-described embodiments. The embodiments are just examples, and any examples that substantially have the same feature and demonstrate the same functions and effects as those in the technical concept disclosed in claims of the present invention are included in the technical scope of the present invention.

## Claims

1. An addition-curable liquid silicone rubber composition for an airbag, the composition comprising:
(A) 100 parts by mass of an organopolysiloxane having two or more alkenyl groups bonded to a silicon atom in one molecule and having a polymerization degree of 50 to 2,000;
(B) an organohydrogenpolysiloxane having two or more hydrogen atoms bonded to a silicon atom (hydrosilyl groups) in one molecule at an amount so that the hydrosilyl groups contained in the composition is 1 to 10 mol per mole of a sum of alkenyl groups bonded to a silicon atom contained in the composition;
(C) 1 to 50 parts by mass of silica fine powder having a BET-method specific surface area of 50 m²/g or more;
(D) a catalyst for a hydrosilylation reaction at 1 to 500 ppm in terms of a mass of a catalyst metal element relative to a mass of the component (A);
(E) 0.1 to 10 parts by mass of an organosilicon compound having an adhesiveness-imparting functional group; and
(F) a metal carboxylate salt at 100 to 5,000 ppm in terms of a mass of a center metal relative to the mass of the component (A).

2. The addition-curable liquid silicone rubber composition for an airbag according to claim 1, wherein the component (E) is an organosilicon compound having: one or more reactive silyl groups selected from an alkoxysilyl group, an alkenyl-group-containing silyl group, and a hydrosilyl group; and one or more reactive organic groups selected from an epoxy group, an isocyanate group, and a (meth)acryl group, in one molecule.

3. The addition-curable liquid silicone rubber composition for an airbag according to claim 1, further comprising, as a component (G), one or more condensation catalysts selected from an organotitanium compound, an organozirconium compound, and an organoaluminum compound at 0.05 to 5 parts by mass relative to 100 parts by mass of the component (A).

4. The addition-curable liquid silicone rubber composition for an airbag according to claim 1, wherein the metal carboxylate salt of the component (F) is a metal salt of a carboxylic acid having 6 or more carbon atoms.

5. The addition-curable liquid silicone rubber composition for an airbag according to claim 1, wherein a center metal ion of the metal carboxylate salt of the component (F) is a trivalent iron ion.

6. The addition-curable liquid silicone rubber composition for an airbag according to claim 1, further comprising, as a component (H), a powdery organopolysiloxane resin having three-dimensional network structure (provided that the organopolysiloxane resin has no hydrogen atom bonded to a silicon atom) at 0.1 to 100 parts by mass relative to 100 parts by mass of the component (A).

7. An airbag, comprising a cured coating film of the addition-curable liquid silicone rubber composition for an airbag according to any one of claims 1 to 6 on a base fabric for an airbag.
